Europäisches Patentamt

European Patent Office

Office européen des brevets

(11) Numéro de publication: **0 123 590**
**A1**

(12) **DEMANDE DE BREVET EUROPEEN**

(21) Numéro de dépôt: **84400652.8**

(22) Date de dépôt: **02.04.84**

(51) Int. Cl.³: **H 01 R 13/518**
**H 01 R 13/64**

(30) Priorité: **15.04.83 FR 8306206**

(43) Date de publication de la demande:
**31.10.84 Bulletin 84/44**

(84) Etats contractants désignés:
**AT BE CH DE FR GB IT LI LU NL SE**

(71) Demandeur: **COMPAGNIE DEUTSCH (Société**
**Anonyme)**
**10, rue Lionel-Terray**
**F-92502 Rueil-Malmaison(FR)**

(72) Inventeur: **Vantouroux, Patrick**
**4, Avenue d'Oradour sur Glane**
**F-45400 Fleury les Aubrais(FR)**

(74) Mandataire: **Loyer, Yves et al,**
**CABINET PIERRE LOYER 18, rue de Mogador**
**F-75009 Paris(FR)**

(54) Connecteur perfectionné.

㊇ La partie mobile 1 du connecteur est formée de la juxtaposition de blocs modulaires, fixés dans des boîtiers modulaires 4, ces boîtiers 4 étant amovibles dans les logements 12 d'un boîtier collectif rectangulaire 1. L'une des faces externes des boîtiers 4 porte des reliefs 14 coopérant avec des encoches 15 munies de cloisons 20 de l'une des faces internes des logements 12.

Fig.9

EP 0 123 590 A1

1 0123590

Connecteur perfectionné.

Dans l'état actuel des technologies avancées telles que la technologie aéro-spatiale des connecteurs, notamment les connecteurs du type dit "push-pull" sont constitués de blocs généralement cylindriques portant un nombre élevé de contacts, les parties fixe et mobile étant montées dans des boîtiers métalliques qui s'emboîtent et sont munis de systèmes de verrouillage.

Un tel connecteur est décrit au brevet français n° 73.37329 déposé le 19 octobre 1973 au nom de la demanderesse.

Cependant, la multiplicité des précautions à prendre pour éviter toute erreur de connexion conduit à multiplier le nombre des modèles et de ce fait, on ne peut guère prévoir des variantes de câblage utilisant le même matériel.

D'autres part, ces connecteurs ont un poids et un encombrement qui ne sont pas négligeables et qu'il est souhaitable de réduire.

La présente invention a précisément pour objet un connecteur de faible masse et encombrement, assurant des possibilités multiples de détrompage,tant à l'accouplement qu'au montage et permettant cependant de réaliser des variantes de câblage avec le même matériel.

Le connecteur selon l'invention est caractérisé en ce qu'au moins la partie mobile est formée de la juxtaposition de blocs modulaires portant les douilles ou les broches, ces blocs ayant la forme de dominos et étant fixés dans des boîtiers modulaires plastiques rigides de même forme générale ; les modèles ainsi constitués sont montés côte à côte de façon amovible dans les logements adjacents d'un boîtier collectif rectangulaire, l'une des faces externes des boîtiers modulaires portant des reliefs coopérant avec des encoches de l'une des faces internes des logements du boîtier collectif et les bords en contact de la partie fixe et de la partie mobile portant des reliefs et des encoches se correspondant, lesdites encoches étant à la fabrication, barrés par des cloisons susceptibles d'être brisées, tandis que les reliefs sont susceptibles d'être supprimés ; l'autre face externe des boîtiers modulaires portant des clés de prépositionnement correspondant à des encoches situées dans des positions différentes dans les différents logements d'un boîtier collectif.

Avec cette disposition, on dispose donc :

a) D'un détrompage à l'accouplement qui peut être déterminé par l'utilisateur par le choix des reliefs et encoches de bords de boîtiers fixe et mobile qui sont conservés et dégagés pour coopérer ; ce détrompage interdit toute interversion de boîtiers à l'accouplement.

b) D'un détrompage de positionnement des modules dans le boîtier collectif par le prépositionnement des clés des modules et des encoches des logements.

Ce détrompage qui vient de construction, interdit toute interversion des modules entre les logements d'un même boîtier collectif : chaque module à une position impérative à l'intérieur du boîtier collectif.

c) D'un détrompage au montage des modules par le choix des reliefs et encoches sélectionnés pour être conservés et coopérer.

Ce détrompage peut être déterminé et réalisé par l'utilisateur et permet en combinaison avec les détrompages précédents, de réaliser une grande variété de câblages avec le même matériel sans risque d'erreur.

0123590

L'invention prévoit en outre sur l'une des faces d'un logement de boîtier collectif, une lumière en forme de U dont les branches sont orientées vers la face d'introduction des modules, la paroi du logement étant amincie sur la zone séparant cette lumière de ladite face, et sur la base de la languette située entre les branches du U pour reprendre progressivement l'épaisseur normale à l'extrémité de ladite languette, la face externe correspondante d'un boîtier modulaire étant munie de deux reliefs longitudinaux au droit des branches du U et d'un relief transversal formant butée placé pour s'insérer dans la branche inférieure du U lorsque ledit module est en place.

L'épaisseur de ces reliefs est au plus égale à l'amincissement de la paroi du logement ci-dessus spécifié.

De préférence, les reliefs longitudinaux ci-dessus sont interrompus à distance du relief transversal de façon à permettre l'insertion d'un outil de démontage en forme de fourche élastique de même épaisseur que lesdits reliefs et de largeur égale à la distance séparant les reliefs longitudinaux, fourche dont les branches portent des redents latéraux s'insérant derrière les extrémités des reliefs longitudinaux lorsque l'outil vient en butée contre le relief transversal et dégage celui-ci en soulevant l'extrémité de la languette.

Les dispositions de l'invention seront plus amplement décrites ci-après avec référence au dessin annexé sur lequel :

La figure 1 est une vue d'un exemple de réalisation selon les flèches C, des figures 4 ou 5 ;

La figure 2 est une vue latérale d'une variante à partie mobile modulaire selon la flèche A de la figure 4 ;

La figure 3 est une vue latérale d'une variante à parties fixe et mobile modulaires selon la flèche B de la figure 5 ;

La figure 4 est une coupe selon DD de la figure 2 ;

La figure 5 est une coupe selon EE de la figure 3 ;

Les figures 6 à 10 sont des schémas de détail, en perspectives, illustrant les différents systèmes de détrompages portés par le connecteur ;

Les figures 11 à 14 illustrent des variantes de brochage de modules ;

La figure 15 illustre le système et l'outil de démontage des boîtiers modulaires.

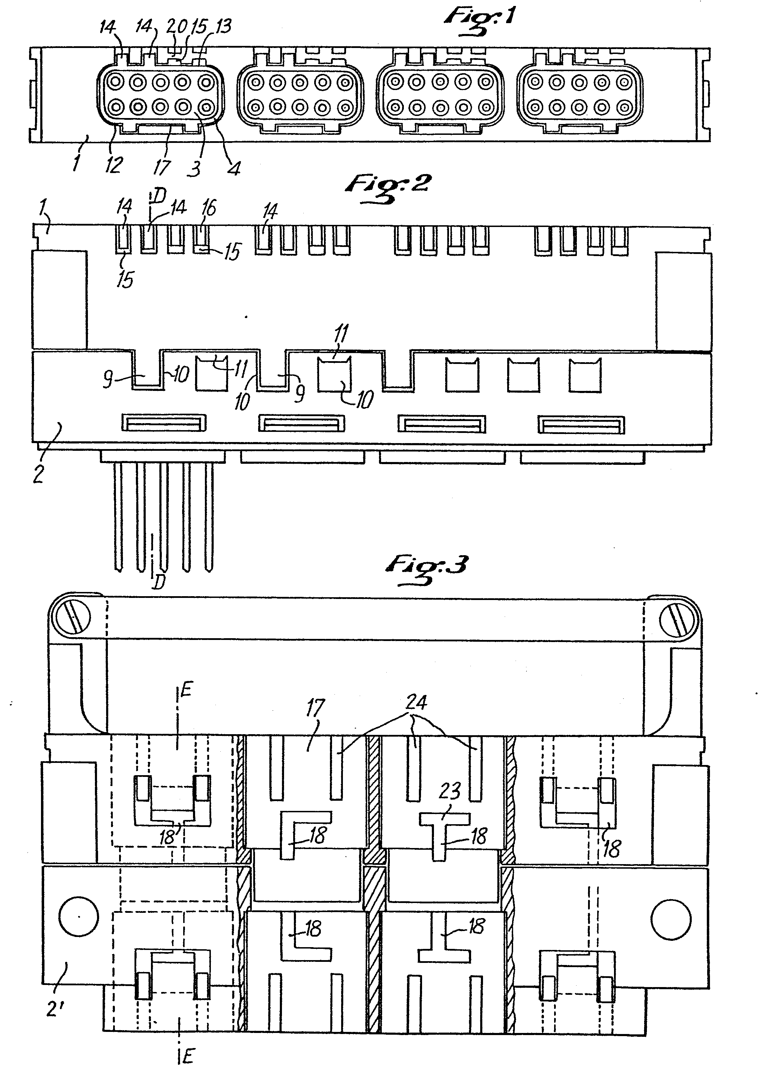

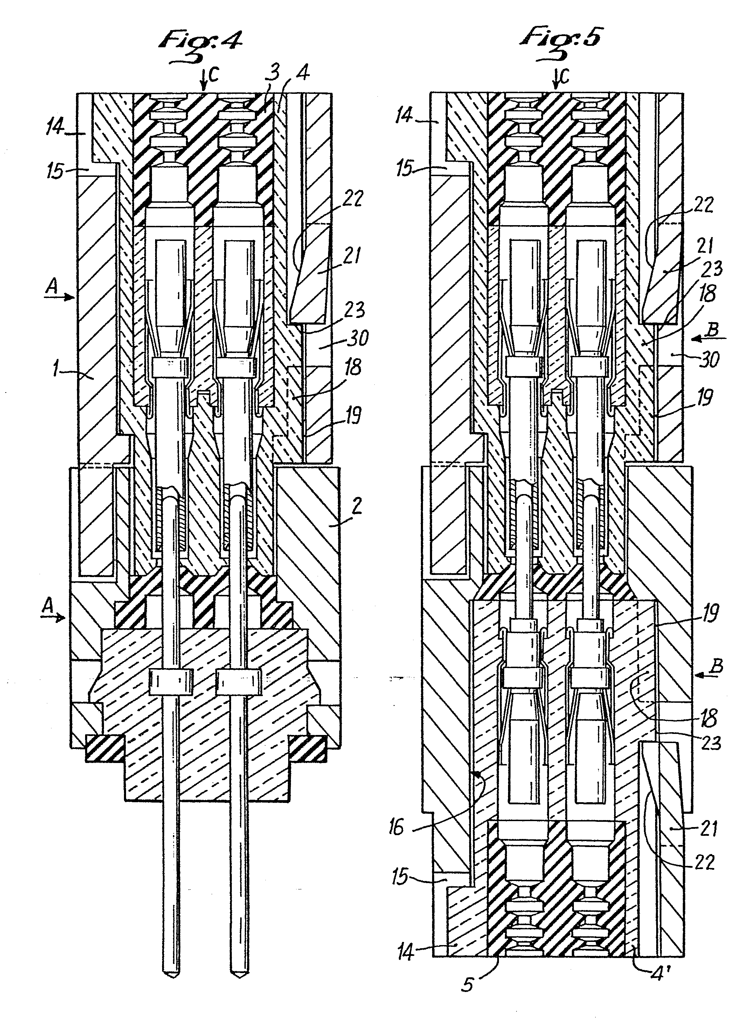

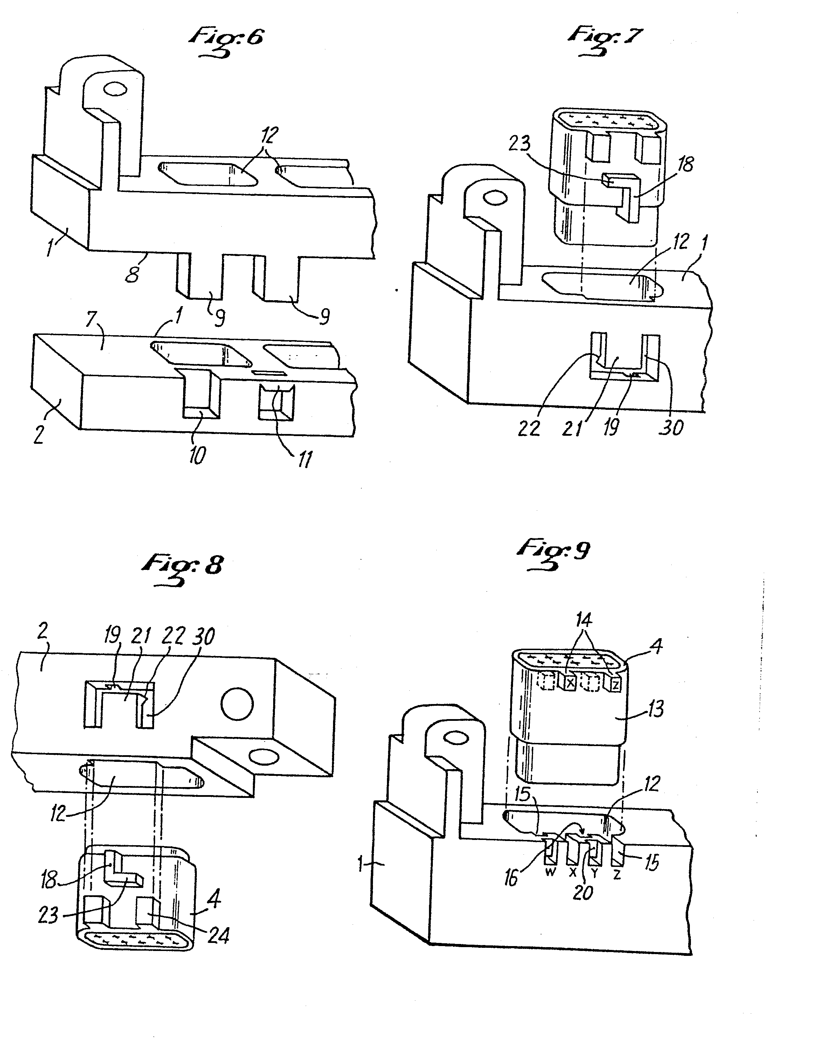

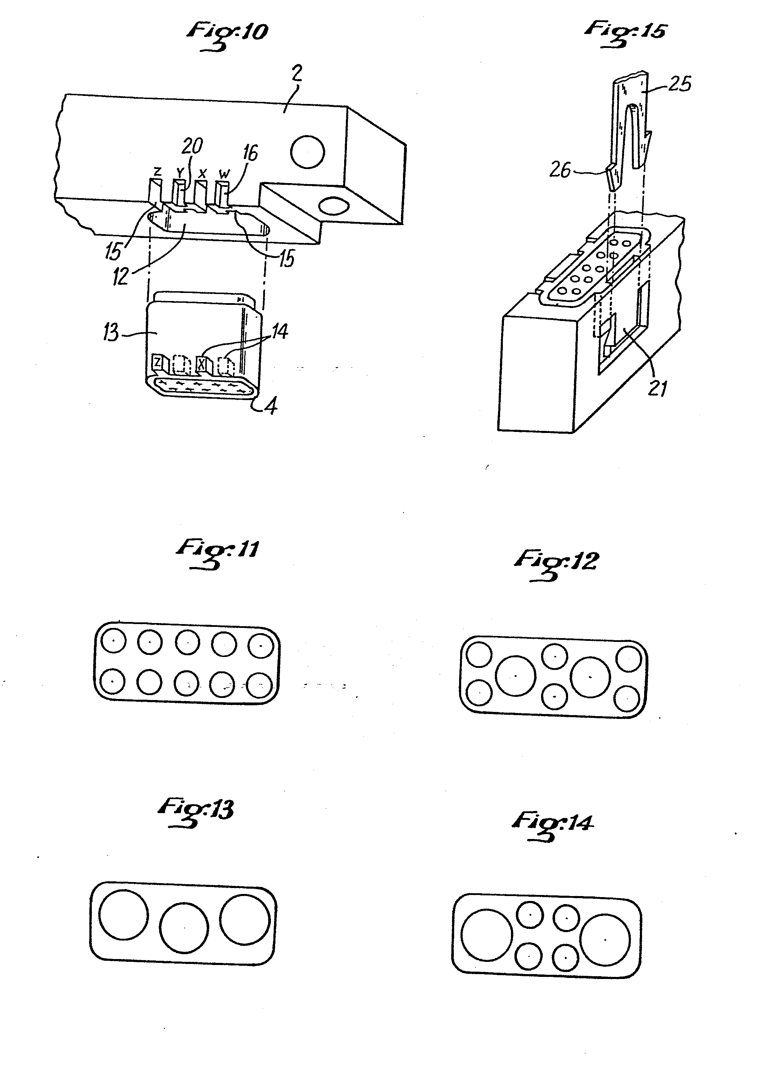

En se reportant aux figures 1, 2 et 4, on voit une variante de réalisation dans laquelle la partie mobile 1 d'un connecteur (dont la partie fixe est représentée en 2) est constituée de la juxtaposition d'une série de dominos modulaires 3, 4 formés d'un bloc d'élastomère 3 portant les douilles, ce bloc étant fixé (par exemple par collage) dans un boîtier modulaire de matière plastique rigide 4 pour constituer un module, les modules étant montés amovibles côte à côte dans les logements adjacents 12 d'un boîtier collectif 1 formant le corps de la partie mobile, lui-même de préférence en plastique rigide.

Dans cette conception, l'ensemble du connecteur a la forme générale d'une cassette plate, ce qui permet de diminuer l'encombrement de l'association de plusieurs connecteurs qui peuvent en outre être assemblés entre eux.

Dans la variante des figures 1, 3 et 5, la partie fixe 2 est constituée de façon modulaire comme la partie mobile 1 par la juxtaposition d'une série de dominos modulaires, au moyen de blocs d'élastomère 5 fixés dans des boîtiers modulaires 4' de matière plastique rigide, de constitution identique à ceux de la partie mobile, placés dans des logements 12 du boîtier collectif 2'.

Les faces en contact 7 et 8 (figure 6), des boîtiers de la partie fixe et de la partie mobile portent des reliefs ou clés 9 et des encoches 10 qui se correspondent, les reliefs 9 étant supprimables et les encoches 10 étant à la fabrication, barrés par des cloisons 11 susceptibles d'être également supprimées.

La figure 6 illustre en détail cette disposition. Sur cette figure, la cloison 11 est encore en place alors que l'encoche 10 est dégagée par suppression de la cloison.

La face externe 13 des boîtiers modulaires 4 porte des reliefs 14 correspondant à des encoches 15 de la face interne 16 de chaque logement 12 du boîtier collectif 1 ou 2 (figures 3 et 5). Les encoches 15 sont barrées par des cloisons pontets 20. Les reliefs 14 et les pontets 20 peuvent être conservés ou supprimés en correspondance inverse.

Les figures 9 et 10 illustrent en détail cette disposition pour la partie mobile 1 et pour la partie fixe 3 (figure 3). Sur ces figures, les reliefs 14 supprimés sont représentés en pointillé. Les cloisons 20 supprimées ne sont pas représentées (encoches X et Z).

La face externe opposée 17 des boîtiers modulaires 4 porte des reliefs 18 formant clés de prépositionnement. Ces clés 18 correspondent à des encoches 19 prévues sur la face interne correspondante des logements 12.

La position des clés 18 et des encoches 19 varie d'un module à l'autre et d'un logement au suivant.

Cette disposition est représentée aux figures 7 et 8.

L'ensemble et la combinaison de ces dispositions assurent :

- Le détrompage à l'accouplement. Une prise mobile 1 ne peut être par erreur intervertie avec une prise voisine dès lors que l'on a convenablement sélectionné les reliefs ou clés 9 qui sont maintenus ou supprimés ainsi que les cloisons 11 qui sont supprimées ou maintenues.

Les reliefs 9 et les cloisons 11 étant réalisés à la fabrication, c'est à l'utilisateur qu'il appartiendra de réaliser ·cette opération de polarisation qui ne nécessite donc aucune modification de modèle à la fabrication.

- Un premier détrompage au montage des boîtiers modulaires 4 du fait du prépositionnement réalisé par les reliefs 18 et les encoches 19.

Chaque module ne peut occuper qu'une seule position dans un même boîtier collectif. Ce prépositionnement vient de fabrication et n'est pas soumis à l'utilisateur. Il entraîne la fabrication d'autant de modules que de logements dans un connecteur, mais il multiplie d'autant les possibilités de polarisation du détrompage suivant.

- Un second détrompage au montage des modules du fait de la sélection des reliefs 14 qui sont maintenus ou supprimés ainsi que des cloisons 20 qui sont supprimées ou maintenues.

Ces reliefs ou cloisons venant de fabrication, c'est à l'utilisateur qu'il appartient de réaliser cette sélection en tenant compte du prépositionnement de chaque module.

Le même matériel permet donc la réalisation d'une grande variété de câblages sans erreur au montage ou à l'accouplement et ce, avec un matériel standard comportant une série limitée de boîtiers modulaires.

L'une des parois de logements 12 porte en outre une lumière 30 en forme de U dont les branches sont tournées vers la face d'introduction des modules, et l'épaisseur de la paroi du logement 12 est diminuée sur la zone séparant la lumière 30 de ladite face d'introduction et sur la base de la languette 21, qui reprend ensuite progressivement l'épaisseur de la paroi par une face inclinée formant rampe 22. La face externe correspondante du module comporte une barrette 23 en relief formant butée, placée pour s'insérer dans la branche inférieure de la lumière 30 lorsque le module est en place.

L'épaisseur de la barrette 23 est au plus égale à la diminution d'épaisseur de la paroi dans la zone de la lumière 30.

Ainsi, l'enfoncement des modules provoque un effacement de la languette 21 par élasticité et le blocage du module par coopération de la barrette 23 avec la partie inférieure de la languette 21.

Pour extraire un module, il faut effacer la languette 21.

En outre, la face externe des modules comporte deux reliefs longitudinaux 24 situés au droit des branches latérales de la lumière en U 30. Les reliefs sont interrompus à distance de la barrette 23, ce qui permet l'insertion d'un outil de démontage 25 figure 15, de même épaisseur que les reliefs 23, 24.

Cet outil 25 à la forme d'une fourche de même largeur que l'espace séparant les reliefs 24 et dont les branches portent des redents latéraux externes 26 susceptibles de s'insérer élastiquement derrière les extrémités des reliefs 24 une fois l'outil 25 venu en butée contre la barrette 23 et ayant dégagé celle-ci de son engagement avec la languette 21.

Le connecteur est avantageusement complété par tout dispositif de verrouillage approprié, placé par exemple aux extrémités latérales des boîtiers collectifs 1 et 2. Un tel dispositif est décrit au brevet français n° 83.06206 déposé le 15 avril 1983 sous le titre "Dispositif de guidage et de verrouillage de l'accouplement d'un connecteur" au nom de la demanderesse.

Du fait de leur constitution en cassette plate, plusieurs connecteurs 2, selon l'invention, peuvent être montés côte à côte en empilement ou éventuellement assemblés entre eux par exemple par des boulons. Les modules étant réalisés en matière plastique rigide, aucun problème particulier d'isolation ne se pose.

Comme représenté aux figures 11 à 14, les modules peuvent recevoir des brochages variés, ce qui fournit une latitude supplémentaire de câblage avec le même matériel.

Revendications de brevet.

1. Connecteur perfectionné du type comprenant une partie fixe et une partie mobile dont l'une est munie de douilles et l'autre de broches, ces parties étant formées de la juxtaposition de blocs modulaires en forme de dominos (3), de même forme générale, montés côte à côte dans les logements adjacents (12) d'un boîtier collectif rectangulaire (1, 2), caractérisé en ce que le montage des dominos est un montage amovible, l'une des faces externes des boîtiers (4) des dominos (3) porte des reliefs (14) coopérant avec des encoches (15) munies de cloisons (20) de l'une des faces internes des logements (12), les reliefs (14) et les cloisons (20) étant constitués de façon à pouvoir être supprimés à volonté, l'autre face externe des boîtiers (4) porte des clés de positionnement (18) correspondant à des encoches (19) de la face interne des logements (12), les encoches (19) étant situées en des positions différentes dans les différents logements (12) d'un même boîtier collectif, les faces frontales en contact (7 et 8) de la partie fixe (2) et de la partie mobile (1) portent respectivement des prolongements (9) et des encoches (10) munies de cloisons (11) se correspondant, lesdits prolongements (9) de même que les cloisons (11) étant constitués de façon à pouvoir être supprimés à volonté.

2. Connecteur selon la revendication 1, caractérisé en ce que l'une des faces d'un logement (12) comporte une lumière (30) en forme de U dont les branches sont orientées vers la face d'introduction des boîtiers (4), l'épaisseur de la paroi du logement (12) étant diminuée sur la zone séparant la lumière (30) de ladite face, ainsi que sur la base de la languette (21) pour reprendre son épaisseur normale à l'extrémité de ladite languette, la face externe correspondante des boîtiers (4) étant munie d'un relief transversal (23) placé pour s'insérer dans la branche inférieure du U lorsque ledit boîtier est en place, l'épaisseur du relief (23) étant au plus égale à la diminution d'épaisseur de la paroi du logement (12) dans la zone ci-dessus.

3. Connecteur selon la revendication 2, caractérisé en ce que la même face du boîtier (4) est munie de reliefs longitudinaux (24) au droit des branches parallèles de la lumière (30), ces reliefs étant interrompus à distance du relief (23) et ayant une épaisseur au plus égale à la diminution d'épaisseur de la paroi du logement (12) dans ladite zone.

4. Connecteur selon la revendication 3 comprenant un outil associé pour le démontage des boîtiers (4), ledit outil ayant une épaisseur égale à celle du relief (23) et ayant la forme d'une fourche de largeur égale à la distance séparant les reliefs (24) dont les branches portent des reliefs latéraux externes (26) placés pour s'insérer derrière les extrémités des reliefs (24) lorsque l'outil vient en butée contre le relief (23).

0123590

Fig.1

Fig.2

Fig.3

0123590

2/4

Fig. 4

Fig. 5

*Fig:6*

*Fig:7*

*Fig:8*

*Fig:9*

Fig:10

Fig:15

Fig:11

Fig:12

Fig:13

Fig:14

Office européen
des brevets

# RAPPORT DE RECHERCHE EUROPEENNE

EP 84 40 0652

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | FR-A-2 347 796 (ITT INDUSTRIES)<br>* Figures 1,2; page 3, ligne 6 - page 4, ligne 20 *<br>--- | 1-3 | H 01 R 13/518<br>H 01 R 13/64 |
| Y | FR-A-2 440 095 (LE MATERIEL TELEPHONIQUE)<br>* Figures 1-3; page 3, lignes 12-33 *<br>--- | 1-3 | |
| Y | CH-A- 608 592 (VENTRONIC HOLDING AG)<br>* Figure 1; page 2, colonne 2, lignes 19-34 *<br>--- | 1 | |
| A | FR-A-2 201 552 (AMP)<br>* Figure 1; page 5, lignes 11-20 *<br>--- | 4 | |
| | | | DOMAINES TECHNIQUES RECHERCHES (Int. Cl. ³) |
| A | FR-A-2 415 377 (BACH & CO.)<br>* Figure 2; page 3, lignes 14-34 *<br>----- | 1 | H 01 R 13/00 |

Le présent rapport de recherche a été établi pour toutes les revendications

| Lieu de la recherche<br>LA HAYE | Date d'achèvement de la recherche<br>01-06-1984 | Examinateur<br>WAERN G.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82